(19) Europäisches Patentamt
European Patent Office
Office européen des brevets

(11) Publication number: **0 129 243**
**B1**

(12) # EUROPEAN PATENT SPECIFICATION

(45) Date of publication of patent specification: **19.10.88**

(51) Int. Cl.[4]: **H 01 M 6/16,** H 01 M 4/60, C 07 C 103/30, C 07 C 125/063

(21) Application number: **84107000.6**

(22) Date of filing: **19.06.84**

(54) **Non-aqueous electrochemical cell.**

(30) Priority: **21.06.83 US 506463**

(43) Date of publication of application: **27.12.84 Bulletin 84/52**

(45) Publication of the grant of the patent: **19.10.88 Bulletin 88/42**

(84) Designated Contracting States: **DE FR GB NL**

(56) References cited:
**US-A-3 686 038**
**US-A-4 166 888**

(73) Proprietor: **HONEYWELL INC.**
**Honeywell Plaza**
**Minneapolis Minnesota 55408 (US)**

(72) Inventor: **Doddapaneni, Narayan**
**700 Vance Drive**
**Glenside Pennsylvania 19038 (US)**

(74) Representative: **Rentzsch, Heinz et al**
**Honeywell Europe S.A. Holding KG Patent- und Lizenzabteilung Kaiserleistrasse 55**
**D-6050 Offenbach am Main (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 129 243 B1

Courier Press, Leamington Spa, England.

**Description**

The invention relates to non-aqueous electrochemical cells and, more particularly, to a high-rate, non-aqueous electrochemical cell which is free of sulfur-containing compounds.

In the field of high energy battery systems utilizing highly reactive anode materials such as alkaki metals are known in combination with non-aqueous electrolytes. The electrolyte is normally composed of a solute which is commonly a metal salt or a complex metal salt of group I—A, II—A or III—A elements of the Periodic Table dissolved in a compatible non-aqueous solvent. The batteries often are used in applications which require them to be operable over a wide temperature range with a high output over that wide temperature range. For this reason, much research has been conducted concerning the development of solvent-solute pairs which are stable and have a high ionic conductivity over a wide temperature range. This generally means that the solvent solute pair should be in the liquid state over this wide temperature range, i.e., have a low freezing point and a high boiling point.

In addition, it is desirable that the chemical system of the electrochemical cell have a long, stable shelf life when used in a primary or secondary battery system. The prior art is replete with many examples of such cells which utilize solvents containing sulfur dioxide ($SO_2$), thionyl chloride ($SOCl_2$) and sulfuryl chloride ($SO_2Cl_2$). These compounds, along with certain other oxyhalides, are normally used in combination with an alkali metal anode or alkaline earth metal anode and an electrolyte consisting of a salt of a cation of the metal of the anode together with the solvent materials.

The basic problem with the electrochemical cells of the prior art, especially those cells utilizing sulfur dioxide, thionyl chloride or sulfuryl chloride has been the problem with safe storage and operation of the batteries. Under certain circumstances, the batteries tend to experience thermal runaway in which reactions and pressure buildup within the cell may actually cause a very violent explosion. One reason for this occurrence has been traced to reactions which occur between the metal anode and the sulfur of the solvent material. In addition, because sulfur dioxide is a gas at ordinary temperatures, overheating or the use of such batteries at higher temperatures of batteries may lead to the buildup of excessive pressure within the cell.

In order to overcome the problems associated with the use of sulfur dioxide, thionyl chloride and sulfuryl chloride in high energy density, non-aqueous electrochemical cells the present invention provides an organic solvent depolarizer system which allows long-term safe storage and greatly reduces the hazzards previously encountered in operating such cells including the toxicity problems associated with the electrochemical system involved.

The organic solvent depolarizers of the invention are represented by the general formula:

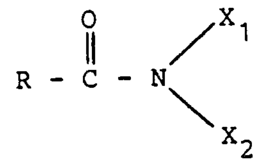

wherein R is an alkyl, alkoxy, phenyl or phenoxy group and $X_1$ or $X_2$ are halogens. Depending on the cell application, the depolarizers may be in the liquid or solid state. The cell may include an alkali or alkaline earth metal anode, a cathode where the cathode depolarizer is reduced, and a compatible electrolyte salt which is soluble in the solvent depolarizer. Preferred embodiments are described in the subclaims.

It should be mentioned that electrochemical cells are known in which compounds of similar but not identical structure are used as an electrolyte solvent. US—A 41 66 888 describes an electrochemical cell having an alkali metal anode, a fluorinated carbon cathode, and an electrolyte containing a mixed solvent system containing about 20 to about 80 percent by volume, based on the total solvent volume, of one or more substituted amides having the formula:

$$R_1CONR_2R_3$$

wherein $R_1$ is an alkyl radical having 1 to 3 carbon atoms and wherein $R_2$ and $R_3$ may be the same or different and are alkyl radicals having 1 to 4 carbon atoms, and containing about 80 to about 20 percent by volume, based on the total solvent volume, of one or more cosolvents, at least a part of which is cyclic carbonate cosolvent; and, one or more alkali metal halide salts having the formula:

$$ZX$$

wherein Z is an alkali metal and wherein X is a halogen selected from the group consisting of chlorine and fluorine.

Furthermore, US—A 36 86 038 discloses a high energy density galvanic battery comprising an anode of a Group I—A or II—A metal having an equivalent weight no greater than 23, an electrolyte solution and a cathode selected from the group of cathodes consisting essentially of iron sulfide, copper sulfide, nickel sulfide, nickel difluoride and mixtures of iron sulfide, copper sulfide, nickel sulfide and nickel difluoride. It uses an electrolyte consisting essentially of from 100 to about 60% by weight of at least one primary solvent having the formula:

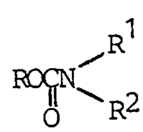

in which R is a $C_1$ to $C_4$ alkyl group, $R^1$ is a $C_1$ to $C_4$ alkyl group, $R^2$ is a $C_1$ to $C_4$ alkyl group or a $C_6$ to $C_8$ carbocyclic aryl group or $R^1 + R^2$ together are a $C_4$ to $C_5$ alkylene diradical or the 3-oxapentylene-1,5 diradical, and complementally from 0 to about 40% by weight of at least one secondary solvent having the formula

$$R^3O[CH(R^4)CH_2O]_nR^3$$

in which $R^3$ is a $C_1$ to $C_4$ alkyl group, $R^4$ H or a methyl group and n is 0, 1 or 2 and at least one dissolved salt having the formula $MM'F_6$ where M is selected from the group consisting of Li, Na and K and M' is selected from the group consisting of P, As and Sb.

The invention is based on the desirability of eliminating sulfur containing compounds from high voltage, high energy density, non-aqueous electrochemical cells without sacrificing cell performance. Accordingly, it has been discovered that certain N,N-dihalocarbamates provide excellent cathode depolarization characteristics and are compatible with the highly reactive alkali or alkaline earth metal anodes and non-aqueous electrolyte salts. N,N-dihalocarbamates follow the general formula

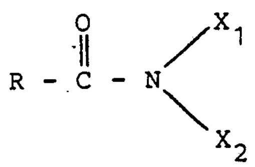

wherein R is an alkyl, alkoxy, phenyl or phenoxy group and $X_1$ and $X_2$ are halogens including flourine, chlorine, bromine, and iodine or combinations of them.

While others may successfully be used, the preferred organic depolarizer is one selected from a group including N,N-dichloromethoxy carbamate and N,N-dichloroethoxy carbamate.

The solvent depolarizer is paired with a compatible electrolyte salt which forms a system capable of long shelf life and good cell performance. The electrolyte salt must be soluble in the solvent depolarizer. Any electrolyte salt which meets the cell criteria may be used.

Anode materials are generally selected from the alkaki or alkaline earth metals. Of these, lithium, sodium, calcium and potassium are preferred.

One successful cell utilized a lithium anode, N,N-dichloroethyl carbamate as the cathode depolarizer and a tetra-alkyl ammonium perchlorate electrolyte salt. The cell was observed to have an open circuit voltage of 3.94 volts and, at a constant discharge current of 0.32 mA per square centimeter the cell exhibited a flat discharge voltage of 3.52 volts.

Another cell had a lithium anode, an N,N-dichloroethyl carbamate solvent depolarizer and a lithium hexafluoroarsenate electrolyte salt. That cell exhibited a flat discharge voltage of approximately 3.5 volts at a constant current of 1 mA per square centimeter. The solubility of the electrolyte salt in the solvent depolarizer was observed to be 1.3 g in 5 g of solvent at room temperature.

**Claims**

1. A non-aqueous electrochemical cell having an active metal anode, a cathode and a non-aqueous electrolyte, characterized by an organic cathode depolarizer represented by the formula

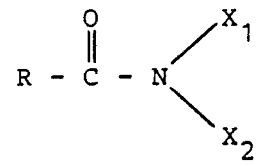

where R is a group selected from those consisting of alkyl, alkoxy, phenyl or phenoxy groups and where $X_1$ or $X_2$ are halogens.

2. A cell according to claim 1, characterized in that said organic cathode depolarizer is a liquid at the normal operating temperature of said system.

3. A cell according to claim 1, characterized in that said organic cathode depolarizer is a solid at the normal operating temperature of said system.

4. A cell according to claim 1, characterized in that the halogens of $X_1$ and $X_2$ are selected from fluorine, chlorine, bromine and iodine or combinations thereof.

5. A cell according to claim 1, characterized in that said halogens are chlorine.

6. A cell according to one of the preceeding claims, characterized in that said anode is one selected from the alkali and alkaline earth metal groups consisting of lithium, sodium, calcium and potassium.

7. A cell according to claim 5 or 6, characterized in that said organic depolarizer is one selected from N,N-dichlorethyl carbamate, N,N-dichloromethyl carbamate, N,N-dichloromethoxy carbamate and N,N-dichloroethoxy carbamate.

**Patentansprüche**

1. Eine nicht-wässrige elektrochemische Zelle mit einer aktiven Metallanode, einer Kathode und einem nicht-wässrigen Elektrolyten, gekennzeichnet, durch einen organischen Kathodendepolarisator, dargestellt durch die Formel

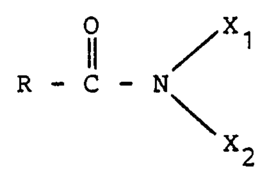

wobei R eine Gruppe ist, ausgewählt aus jenen umfassend die Alkyl-, Alkoxy-, Phenyl-, oder Phenoxy-Gruppen und wobei $X_1$ und $X_2$ Halogene sind.

2. Eine Zelle gemäß Anspruch 1, dadurch gekennzeichnet, daß der organische Kathodendepolarisator bei der normalen Betriebstemperatur der Zelle flüssig ist.

3. Eine Zelle gemäß Anspruch 1, dadurch gekennzeichnet, daß der organische Kathodendepolarisator bei der normalen Betriebstemperatur der Zelle fest ist.

4. Eine Zelle gemäß Anspruch 1, dadurch gekennzeichnet, daß die Halogene $X_1$ und $X_2$ aus der Gruppe bestehend aus Fluor, Chlor, Brom, Jod oder Kombinationen hiervon ausgewählt ist.

5. Eine Zelle gemäß Anspruch 1, dadurch gekennzeichnet, daß die Halogene Chlor sind.

6. Eine Zelle gemäß einem der vorangehenden Ansprüche, dadurch gekennzeichnet, daß die Anode aus den Alkalimetall- und Erdalalkimetall-Gruppen ausgewählt ist, bestehend aus Lithium, Natrium, Kalzium und Kalium.

7. Eine Zelle nach Anspruch 5 oder 6, dadurch gekennzeichnet, daß der organische Depolarisator ausgewählt ist aus der Gruppe bestehend aus N,N-Dichloräthylkarbamat, N,N-Dichlormethylkarbamat, N,N-Dichlormethoxykarbamat und N,N-Dichlorethoxykarbamat.

**Revendications**

1. Cellule électrochimique non aqueuse ayant une anode métallique active, une cathode et un électrolyte non aqueux, caractérisée par un dépolarisant cathodique organique représenté par la formule

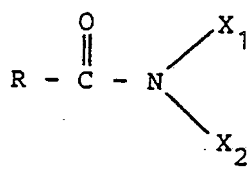

dans laquelle R est un groupe choisi parmi les groupes alkyle, alcoxy, phényle ou phénoxy, et dans laquelle $X_1$ et $X_2$ sont des atomes d'halogène.

2. Cellule selon la revendication 1, caractérisée en ce que le dépolarisant cathodique organique est un liquide à la température de fonctionnement normale du système.

3. Cellule selon la revendication 1, caractérisée en ce que le dépolarisant cathodique organique est un solide à la température de fonctionnement normale du système.

4. Cellule selon la revendication 1, caractérisée en ce que les halogènes représentés par $X_1$ et $X_2$ sont choisis parmi le fluor, le chlore, le brome et l'iode, ou des combinaisons de ceux-ci.

5. Cellule selon la revendication 1, caractérisée en ce que les halogènes sont des atomes de chlore.

6. Cellule selon l'une des revendications précédentes, caractérisée en ce que l'anode est choisie parmi les groupes de métaux alcalins et alcalino-terreux constitués par le lithium, le sodium, le calcium et le potassium.

7. Cellule selon la revendication 5 ou 6, caractérisée en ce que le dépolarisant organique est choisi parmi le N,N-dichloroéthylcarbamate, le N,N-dichlorométhylcarbamate, le N,N-dichlorométhoxycarbamate et le N,N-dichloroéthoxycarbamate.